# EUROPEAN PATENT APPLICATION

(11) **EP 4 412 378 A1**
(43) Date of publication of application: **07.08.2024**
(21) Application number: 22876764.6
(22) Date of filing: 23.09.2022
(51) Int. Cl.: H04W 74/04, H04W 74/08, H04W 72/04, H04W 84/12

(54) **CHANNEL ACCESS METHOD FOR RAPID TRANSMISSION OF DATA IN COMMUNICATION SYSTEM**

(30) Priority: 29.09.2021 KR 20210129137
(71) Applicant: Hyundai Motor Company, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Isarpatent
(86) International application number: PCT/KR2022/014293
(87) International publication number: WO 2023/054992

(57) **Abstract**

Disclosed is a channel access method for rapid transmission of data in a communication system. The method for an AP comprises the steps of: performing, for transmission to a first STA, backoff procedures for all ACs; if, from among the backoff procedures, a first backoff procedure has been successful, transmitting, to the first STA, a first data frame associated with the first backoff procedure; and receiving, from the first STA, a reception response frame to the first data frame.

## Description

### [Technical Field]

The present disclosure relates to a wireless local area network (LAN) communication technique, and more particularly, to a technique for rapidly transmitting time-sensitive data.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

Improvements to the conventional carrier sensing multiple access/collision avoidance (CSMA) scheme may be required for low-latency operations in a wireless LAN. To transmit data based on the CSMA scheme, a communication node may check whether a channel is in an idle state by performing a channel access procedure. When the channel is in the idle state, the communication node may transmit data. That is, the communication node may compete with other communication nodes to transmit data. Since it takes time due to competition, there may be limitations in quickly transmitting data.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a channel access method for rapidly transmission time-sensitive data in a communication system.

### [Technical Solution]

A method of an access point (AP), according to a first exemplary embodiment of the present disclosure for achieving the above-described objective, may comprise: performing backoff procedures for all access categories (ACs) for transmission to a first station (STA); in response to that a first backoff procedure among the backoff procedures succeeds, transmitting a first data frame associated with the first backoff procedure to the first STA; and receiving a reception response frame for the first data frame from the first STA.

The first data frame may be transmitted within a restricted target wake time (rTWT) service period (SP), and when a time from a time of receiving the reception response frame to an end time of the rTWP SP is equal to or larger than a predefined time, a transmission procedure of a second data frame may be performed within the rTWT SP after receipt of the reception response frame.

The first data frame may be an rTWT data frame, and the second data frame may be a general data frame not including time sensitive network (TSN) data.

The rTWT data frame may be a delay-sensitive data frame, and may be identified by an indicator included in the rTWT data frame.

The first data frame may be transmitted within the rTWT SP, and when a time from a time of receiving the reception response frame to an end time of the rTWP SP is equal to or larger than a predefined time, a transmission procedure of a trigger frame for uplink resource allocation may be performed within the rTWT SP.

The method may further comprise: performing the backoff procedures for all the ACs for transmission to a second STA after an arbitration interframe space (AIFS) elapses from a time of receiving the reception response frame; and in response to that a second backoff procedure among the backoff procedures succeeds, transmitting a third data frame associated with the second backoff procedure to the second STA.

The backoff procedures for all the ACs may include an AC_VO backoff procedure, AC_VI backoff procedure, AC_BE backoff procedure, and AC_BK backoff procedure, and each of the first backoff procedure and the second backoff procedure may be one of the AC_VO backoff procedure, the AC_VI backoff procedure, the AC_BE backoff procedure, and the AC_BK backoff procedure.

The first data frame may be transmitted in a period including a first time slot (TS) allocated to the first STA within an rTWT SP, and the third data frame may be transmitted in a period including a second TS allocated to the second STA within the rTWT SP.

If the second backoff procedure is completed before a start time of the second TS, the second backoff procedure may be performed again so that the third data frame is transmitted at or after the start time of the second TS.

In a procedure for the transmission to the second STA, a backoff counter value of the first backoff procedure may be set to a new value, and a backoff counter value of each of remaining backoff procedures excluding the first backoff procedure among the backoff procedures may be set to a remaining value in a procedure for the transmission to the first STA.

A method of an AP, according to a second exemplary embodiment of the present disclosure for achieving the above-described objective, may comprise: performing a first backoff procedure for a first access category (AC) on an actual link and a second backoff procedure for the first AC on a virtual link, for transmission to a first station (STA); in response to that the first backoff procedure succeeds, transmitting a first data frame associated with the first backoff procedure to the first STA; and receiving a reception response frame for the first data frame from the first STA.

The method may further comprise: performing a third backoff procedure for a second AC on the actual link and a fourth backoff procedure for the second AC on the virtual link, for transmission to the first STA, wherein the first backoff procedure, the second backoff procedure, the third backoff procedure, and the fourth backoff procedure are performed in a same time period.

The method may further comprise: performing the first backoff procedure and the second backoff procedure for transmission to a second STA, after an arbitration interframe space (AIFS) from a time of receiving the reception response frame; and in response to that the second backoff procedure succeeds, transmitting a second data frame associated with the second backoff procedure to the second STA.

The first data frame may be transmitted in a period including a first time slot (TS) allocated to the first STA within an rTWT SP, and the second data frame may be transmitted in a period including a second TS allocated to the second STA within the rTWT SP.

If the second backoff procedure is completed before a start time of the second TS, the second backoff procedure may be performed again so that the second data frame is transmitted at or after the start time of the second TS.

In a procedure for the transmission to the second STA, a backoff counter value of the first backoff procedure may be set to a new value, and a backoff counter value of the second backoff procedure may be set to a remaining value in a procedure for the transmission to the first STA.

An AP, according to a third exemplary embodiment of the present disclosure for achieving the above-described objective, may comprise: a processor; and a memory storing one or more instructions executable by the processor, wherein the one or more instructions may be executed to perform: performing backoff procedures for all access categories (ACs) for transmission to a first station (STA); in response to that a first backoff procedure among the backoff procedures succeeds, transmitting a first data frame associated with the first backoff procedure to the first STA; and receiving a reception response frame for the first data frame from the first STA.

The first data frame may be transmitted within a restricted target wake time (rTWT) service period (SP), and when a time from a time of receiving the reception response frame to an end time of the rTWP SP is equal to or larger than a predefined time, a transmission procedure of a second data frame may be performed within the rTWT SP after receipt of the reception response frame.

The first data frame may be an rTWT data frame, and the second data frame may be a general data frame not including time sensitive network (TSN) data.

The first data frame may be transmitted within the rTWT SP, and when a time from a time of receiving the reception response frame to an end time of the rTWP SP is equal to or larger than a predefined time, a transmission procedure of a trigger frame for uplink resource allocation may be performed within the rTWT SP.

### [Advantageous Effects]

According to the present disclosure, a plurality of transmission periods may be configured, and a communication node can quickly transmit data to a plurality of communication nodes by performing a channel access procedure for the plurality of transmission periods. Each of the plurality of communication nodes can receive data in its own transmission period among the plurality of transmission periods. That is, since data can be transmitted and received at a preconfigured time, data transmission delay may not occur. Accordingly, the performance of the communication system can be improved.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3 is a conceptual diagram illustrating a first exemplary embodiment of a reference model of a queue for a channel access procedure according to a slot-based restricted target wake time (rTWT).
FIG. 4 is a timing diagram illustrating a first exemplary embodiment of a slot allocation method for a slot-based rTWT.
FIG. 5 is a conceptual diagram illustrating a first exemplary embodiment of a frame format for negotiating parameters of a slot-based rTWT.
FIG. 6A is a timing diagram illustrating a first exemplary embodiment of a multi-link operation according to a slot-based rTWT.
FIG. 6B is a timing diagram illustrating a second exemplary embodiment of a multi-link operation according to a slot-based rTWT.
FIG. 7A is a timing diagram illustrating a first exemplary embodiment of a channel access procedure when one STA is allocated to one SP in a slot-based rTWT operation.
FIG. 7B is a timing diagram illustrating a second exemplary embodiment of a channel access procedure when one STA is allocated to one SP in a slot-based rTWT operation.
FIG. 7C is a timing diagram illustrating a third exemplary embodiment of a channel access procedure when one STA is allocated to one SP in a slot-based rTWT operation.
FIG. 8A is a timing diagram illustrating a first exemplary embodiment of a channel access procedure when multiple STAs are assigned to one SP in a slot-based rTWT operation.
FIG. 8B is a timing diagram illustrating a secondary exemplary embodiment of a channel access procedure when multiple STAs are assigned to one SP in a slot-based rTWT operation.
FIG. 9 is a timing diagram illustrating a first exemplary embodiment of a channel access procedure and data transmission method when one STA is allocated to one SP in a multi-link operation according to a slot-based rTWT.
FIG. 10 is a timing diagram illustrating a first exemplary embodiment of a channel access procedure and data transmission method when multiple STAs are allocated to one SP in a multi-link operation according to a slot-based rTWT.
FIG. 11 is a timing diagram illustrating a second exemplary embodiment of a channel access procedure and data transmission method when multiple STAs are allocated to one SP in a multi-link operation according to a slot-based rTWT.
FIG. 12A is a timing diagram illustrating a first exemplary embodiment of a channel access procedure and data transmission method according to slots when multiple STAs are allocated to one SP in a multi-link operation according to a slot-based rTWT.
FIG. 12B is a timing diagram illustrating a second exemplary embodiment of a channel access procedure and data transmission method according to slots when multiple STAs are allocated to one SP in a multi-link operation according to a slot-based rTWT.
FIG. 13 is a timing diagram illustrating a first exemplary embodiment of a channel access procedure and data transmission method when multiple NSTR STAs are allocated to one SP in a multi-link operation according to a slot-based rTWT.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

In exemplary embodiments, `configuration of an operation (e.g., transmission operation)' may mean that `configuration information (e.g., information element(s), parameter(s)) for the operation' and/or `information indicating to perform the operation' is signaled. `Configuration of an information element (e.g., parameter)' may mean that the information element is signaled. `Configuration of a resource (e.g., resource region)' may mean that setting information of the resource is signaled.

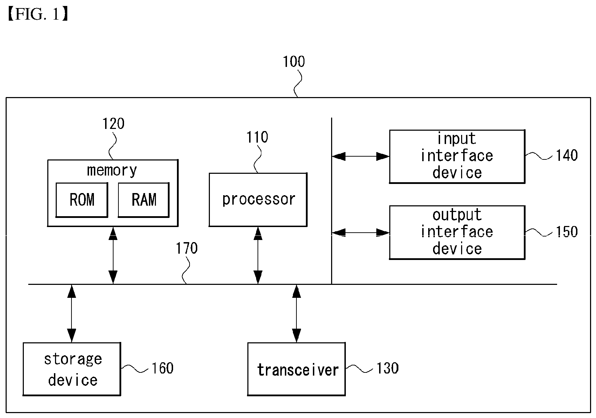

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to `AP', and a station may refer to `STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

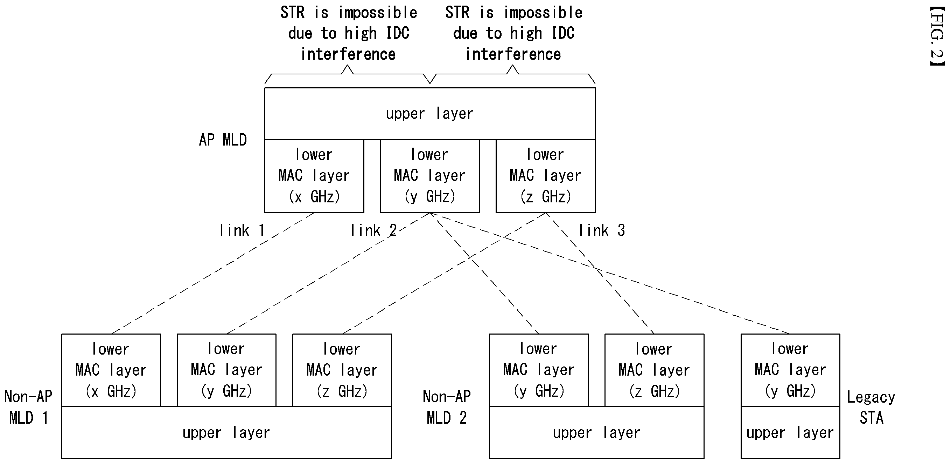

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 110 shown in FIG. 1).

The MLD may perform communications in multiple bands (i.e., multi-band). For example, the MLD may perform communications using a 40 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer (PHY) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as `NSTR AP MLD' or `NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g., access point, station) that supports multiple links may be referred to as `multi-link device (MLD)'. An access point supporting multiple links may be referred to as `AP MLD', and a station supporting multiple links may be referred to as 'non-AP MLD' or `STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP. In exemplary embodiments, an operation of a STA may be interpreted as an operation of a STA MLD, an operation of a STA MLD may be interpreted as an operation of a STA, an operation of an AP may be interpreted as an operation of an AP MLD, and an operation of an AP MLD may be interpreted as an operation of an AP.

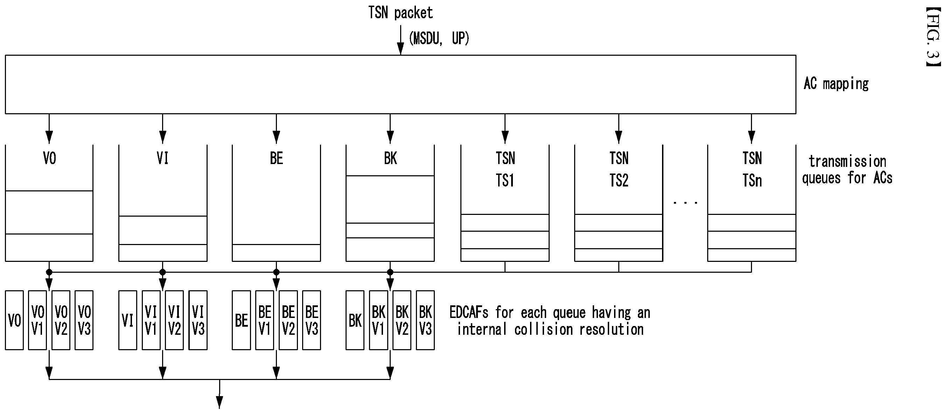

FIG. 3 is a conceptual diagram illustrating a first exemplary embodiment of a reference model of a queue for a channel access procedure according to a slot-based restricted target wake time (rTWT).

As shown in FIG. 3, a time sensitive network (TSN) packet may arrive at an AP. The AP may be an AP MLD that supports multi-link operations. The TSN packet may be referred to as a TSN frame, TSN data, MAC protocol data unit (MPDU), data unit, or data frame. In exemplary embodiments, a packet may refer to a TSN packet. In a wired LAN (e.g., IEEE 802.1D), a TSN packet may be classified as a user priority (UP) 7. In a wireless LAN, a TSN packet may be mapped to an access category (AC) with reference to the UP. In the wireless LAN, the TSN packet may be mapped to a traffic identifier (TID) with reference to the UP. The same value as the UP may be used as being mapped to a TID value. Alternatively, a separate mapping rule may be applied between the UP and the TID. A mapping relationship between the UP of the wired LAN and the AC of the wireless LAN may be defined as Table 1 below. The UP 7 may be mapped to AC_VO or `Any AC'. `Any AC' may mean that any AC may be used. The UP 7 may designate a transmission queue as TSN, and a target of the UP 7 may be TSN data.

**[Table 1]**

| prior ity | UP (IEEE80 2.1D user priority) | IEEE 802.1D designa tion | AC | Transmission queue (dot11Alternate EDCAActivated false or not present) | Transmission queue (dot11Alternate EDCAActivated true) | designation |
|---|---|---|---|---|---|---|
| Low | 1 | BK | AC_BK | BK | BK | background |
| · | 2 | - | AC_BK | BK | BK | Background |
| · | 0 | BE | AC_BE | BE | BE | Best effort |
| · | 3 | EE | AC_BE | BE | BE | Best effort |
| · | 4 | CL | AC_VI | VI | A_VI | Video (alternate) |
| · | | | | | | |
| · | 5 | VI | AC_VI | VI | VI | Video (primary) |
| · | | | | | | |
| · | 6 | VO | AC_VO | VO | VO | Video (primary) |
| · | | | | | | |
| · | 7 | NC | AC_VO or | VO | TSN or A_VO | TSN data |
| High | | | Any AC | | | |

TSN queues as many as the number of time slots (TSs) allocated within a service period (SP) for each STA, which belong to a rTWT SP, may exist. Since a TS is allocated to one STA, there may be as many TSN queues as the number of STAs allocated within one SP (e.g., rTWT SP). In exemplary embodiments, the SP may mean a rTWT SP. An SP1, SP2, and SP3 may exist, and each SP may be repeated periodically. The number of TSs of STA(s) allocated to the SP1 may be 2, the number of TSs of STA(s) allocated to the SP2 may be 4, and the number of TSs of STA(s) allocated to the SP3 may be 3. In this case, two TSN queues may be needed for the SP1, four TSN queues may be needed for the SP2, and three TSN queues may be needed for the SP3. Here, up to four TSN queues may be allocated.

In exemplary embodiments, the TSN queues may be referred to as a TSN TS1, a TSN TS2, ..., and a TSN TSn. A function that performs AC mapping operations may identify a UP of a packet when the packet arrives. If the UP of the packet is 7, the packet may be classified as a TSN packet. Thereafter, a receiver address of the TSN packet may be identified, a TS allocated to a STA corresponding to the receiver address may be identified, and the TSN packet may be entered into a TSN queue for the identified TS. For example, packets to be transmitted in the SP1 may arrive, and the packets may be entered first into the TSN TS1 queue and the TSN TS2 queues.

The packets may be transmitted within the SP1. If the packets are not transmitted during the allocated TS within the SP1, the packets may be discarded. Packets to be transmitted in the SP2 may arrive, and the packets may enter into the TSN TS1, TSN TS2, TSN TS3, and TSN TS4. If the packets to be transmitted in the SP2 arrive before the packets in the SP1 are transmitted, the packets to be transmitted in the SP1 may be input into the TSN TS 1 and TSN TS2, and the packets to be transmitted in the SP2 may be input into the TSN queue(s) next to the TSN TS2. When transmission of the packets in the SP1 is completed or when transmission of the packets in the SP1 fails, the packets to be transmitted in the SP2 may be located at a bottom of the TSN queue. When packets to be transmitted in the SP3 arrive, the packets may be input to the TSN TS1, TSN TS2, and TSN TS3.

There may be only one TSN queue. Packets to be transmitted in the respective TSs within the SP1 may be entered into the TSN queue in order, and packets to be transmitted in respective TSs within the next SP (e.g., SP2) may be entered into the TSN queue in order of arrivals. When a TSN packet arrives, a time at which the TSN packet should be delivered may be identified. If an arrival order and a transmission order for TSN packets are different, the TSN packets may be sorted in the transmission order, and the sorted TSN packets may be entered into the TSN queue. The communication node may sequentially transmit the packets from a packet located at the bottom in the TSN queue. When a packet is transmitted within the TS or when transmission of a packet is not completed within the TS, the packet may be deleted from the TSN queue.

Instead of the TSN queue, an alternative (A)_VO queue may be used. The A_VO queue may be a separate queue distinct from a queue for AC_VO. A channel access procedure may be performed using a VO's enhanced distributed channel access (EDCA) function. In exemplary embodiments, the EDCA function may be referred to as an EDCAF. When `Any AC' is applied, transmission of a packet corresponding to an AC for which a backoff procedure is completed first among all ACs may be performed.

When TSN data (e.g., TSN packet) is entered into the TSN queue or A_VO queue, a channel contention procedure (e.g., channel access procedure) for transmission of the TSN data may be performed in a TS of the SP. The channel contention procedure may be performed according to one or more of the three methods below.
- First method: method of using all ACs
- Second method: method of using virtual links
- Third method: method of using all ACs and virtual links by merging them

As the first method, when all ACs are used, EDCA functions of all the ACs may be used in a transmission procedure of the TSN packet. The EDCA function may exist on a per-queue basis. The EDCA function may continue to be performed regardless of presence or absence of packets in the queue. When a busy state of a channel is terminated, the communication node (e.g., AP or STA) may wait for an AIFS (AIFS[ AC] = AIFSN[AC] × aSlotTime + aSIFSTime) by using a different AIFSN for each AC (AC_BK: 7, AC_BE: 3, AC_VI: 2, AC_VO: 2), and then may select a backoff counter value as a random value between 0 and CW[AC].

CW[AC] may be started from a different CWmin for each AC. If the backoff procedure fails, CW[AC] may be increased by a factor of 2. The CW[AC] may be increased to a different CWmax for each AC. The backoff counter value, randomly selected for each AC EDCA function, may be decreased by one if the channel is idle during aSlotTime. When the backoff counter value for each AC EDCA function becomes 0, the transmission procedure for packets existing in the queue of the corresponding AC may be performed.

When the backoff counter values for two or more AC EDCA functions become 0 at the same time and there are packets to be transmitted in the queues of two or more ACs, this may mean that an internal collision occurs. When an internal collision occurs, packets existing in a queue of an AC with a higher priority may be transmitted preferentially, QSRC[AC] for the unselected AC EDCA function may be increased by 1, and CW[AC] therefor may be increased by a factor of 2. That is, it may be set to (2^QSRC[AC] * (CWmin[AC]+1)-1). Thereafter, the above-described backoff procedure may be performed again. The priorities of ACs may be defined as `BK < BE < VI < VO'.

The TSN queue may be used on a per-TS basis. Alternatively, one TSN queue may be used. The TSN queues may be associated with all AC EDCA functions. Even if there are actual packets in a queue for each AC during the rTWT SP, a state of the corresponding queue may transition to an empty state. Alternatively, states of STAs that are recipients of the packets may virtually transition to a sleep state. After the rTWT SP is started, the above-described backoff procedures according to the AC EDCA functions may be performed. After the rTWT SP is started, among the four AC EDCA functions, packets existing in the queue associated with the AC EDCA function with a backoff counter of 0 may be transmitted. The four AC EDCA functions may include an AC_VO EDCA function, AC_VI EDCA function, AC_BE EDCA function, and AC_BK EDCA function.

When the rTWT SP starts, if all ACs' queues are treated as virtually empty, since the ACs' queues are empty, and the TSN queue is associated with all ACs' queues, an AC EDCA function with a backoff counter value of 0 may transmit packets that exist in the TSN queue. When the states of the STAs, which are recipients of packets, are virtually transitioned to the idle state after the rTWT SP starts, the packets in the queue of the AC associated with the AC EDCA function with the backoff counter value of 0 among the four AC EDCA functions and the TSN packets may be transmission targets. Since the states of the recipients of the packets in the AC queue have virtually transitioned to the idle state, the recipient may not receive the packets. Therefore, the TSN packets may be transmitted.

As the second method, when virtual links are used, it may be assumed that a plurality of virtual links exist, and the EDCA function that independently performs a backoff procedure for each virtual link may be used. Since TSN data set to UP 7 may be mapped to AC_VO with the highest priority, the VO EDCA function (e.g., AC_VO EDCA function) may be used. In the exemplary embodiment of FIG. 3, the VO EDCA function may have additional virtual links, and four VO EDCA functions may operate independently. For example, one VO EDCA function may operate on an actual link, and each of three VO EDCA functions may operate on a virtual link.

The VO EDCA function may be performed independently depending on a channel state of a link on which the rTWT SP is configured. If a backoff procedure according to one of the four VO EDCA functions is successful, packets existing in a TSN queue associated with the backoff procedure may be transmitted. When the VO EDCA function with a virtual link is used and there are actual packets in the queue for each AC during the rTWT SP, the TSN packet may be transmitted based on a method of transitioning the state of the corresponding queue to a virtually empty state, or a method of transitioning the sates of STAs that are the recipients of the packets to a virtual idle state.

As the third method, the first and second methods described above may be used together. The VO EDCA function may additionally have a virtual link EDCA function, and all VO EDCA functions and the virtual link EDCA function may be used together in the transmission procedure of the TSN packet. Since the number of EDCA functions that perform the backoff procedures is large, the TSN packet may be transmitted quickly.

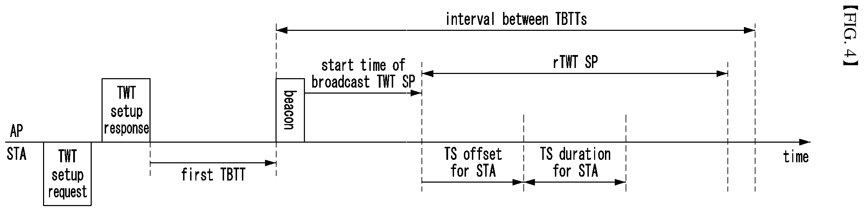

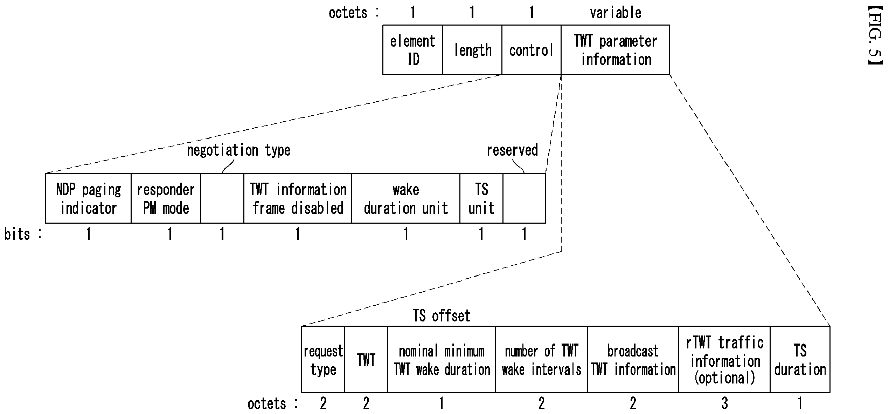

FIG. 4 is a timing diagram illustrating a first exemplary embodiment of a slot allocation method for a slot-based rTWT, and FIG. 5 is a conceptual diagram illustrating a first exemplary embodiment of a frame format for negotiating parameters of a slot-based rTWT.

As shown in FIGS. 4 and 5, a STA may transmit a TWT setup request frame to an AP to negotiate a restricted TWT (rTWT). The AP may receive the TWT setup request frame from the STA. The AP may generate a TWT setup response frame including parameters to be used by the STA, and transmit the TWT setup response frame to the STA. The STA may receive the TWT setup response frame from the AP. The rTWT may be configured by exchanging the TWT setup request frame and the TWT setup response frame. The TWT setup request frame and TWT setup response frame may be action frames. The rTWT may be configured according to a broadcast TWT setup procedure. When the broadcast TWT setup procedure is performed, an ID of the rTWT may be assigned to the STA.

In addition, when the broadcast TWT setup procedure is performed, the STA may identify a target beacon transmission time (TBTT, e.g., wake TBTT), which is a time of transmitting a beacon frame including information on a rTWT service period (SP), and a transmission interval between TBTTs of the beacon frame including the information on the rTWT SP. That is, the STA may identify a time of transmitting the beacon frame including the rTWT SP information by performing the broadcast TWT setup procedure. The AP may transmit the beacon frame including the rTWT SP information at regular intervals. That is, the beacon frame including the rTWT SP information may be transmitted according to a specific periodicity. The beacon frame including the rTWT SP information may include information on the SP which is a period in which the rTWT operates. The information on the SP may indicate information on a time (e.g., start time, end time, and/or duration) of the SP located after the currently transmitted beacon frame. The beacon frame may include information on one or more SPs.

The STA may identify the time of transmitting the beacon frame including the rTWT SP information through the TBTT obtained through the broadcast TWT setup procedure, may receive the beacon frame from the AP at the corresponding time, and may identify the rTWT SP information included in the beacon frame. The beacon frame may include information on a start time and a duration of an SP identified by a rTWT ID. The STA may obtain information on the SP of the rTWT to which the STA belongs based on the rTWT ID obtained through the previous broadcast TWT setup procedure.

In the broadcast TWT setup procedure, a time slot (TS) belonging to the SP may be allocated to the STA. The broadcast TWT setup procedure may include a procedure for exchanging the TWT setup request frame and the TWT setup response frame. The STA may receive data in a TS allocated to itself. That is, the STA may receive data until the TS. The TS may operate as a target time until which the data should be received.

Criteria for receiving data in the TS may differ for each STA. The AP may initiate a data transmission procedure according to the STA's criteria. For example, the AP may initiate a data transmission procedure at a start time of the TS, before the start time of the TS, or after the start time of the TS. The STA may inform the AP of information on the criteria for receiving data from the TS in the rTWT setup procedure. For example, the STA may generate a TWT setup request frame including information on the criteria for receiving data from the TS, and transmit the TWT setup request frame to the AP. The AP may receive the TWT setup request frame from the STA and identify the information included in the TWT setup request frame. The AP may set a start time of the data transmission procedure (e.g., the start time of the TS, before the start time of the TS, or after the start time of the TS) as capability of transmitting data in the TS, and transmit the TWT setup response frame including the information on the start time of the data transmission procedure. The STA may receive the TWT setup response frame from the AP, and identify the information included in the TWT setup response frame.

The TS may be allocated by the TWT setup request frame and/or TWT setup response frame. The TWT setup request frame and/or TWT setup response frame may have the frame format shown in FIG. 5. The TWT element of the TWT setup request frame and/or the TWT setup response frame may include a TS duration subfield, and a nominal minimum TWT wake duration subfield may be used to indicate a TS offset. The TS duration subfield and the nominal minimum TWT wake duration subfield may be used to allocate the TS.

The nominal minimum TWT wake duration may be used to indicate a period of mandatory wakefulness from a start time of the TWT SP. The nominal minimum TWT wake duration may be used to indicate a TS offset from the start time of the TWT SP to the start time of the TS. The TS may be configured as a period indicated by the TS duration subfield from the time indicated by the TS offset. Alternatively, the nominal minimum TWT wake duration subfield may be used to indicate the TS duration, and the TS offset subfield may be included in the TWT setup request frame and/or TWT setup response frame.

After the TSs are allocated to the STAs, a new STA may be allocated to the SP. Depending on a periodicity of TSN data received by the new STA, a situation may arise where a TS already allocated to another STA should be allocated to the new STA. In this case, the TS allocated to another STA may be reallocated to the new STA, and the TS of the another STA may be changed. For all STAs subject to TS change, a TWT setup procedure (e.g., TWT configuration procedure) for allocating TSs may be performed again.

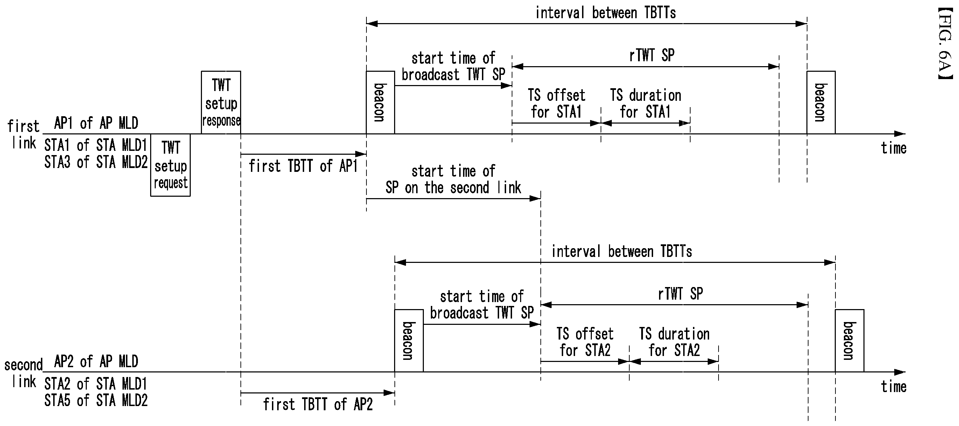

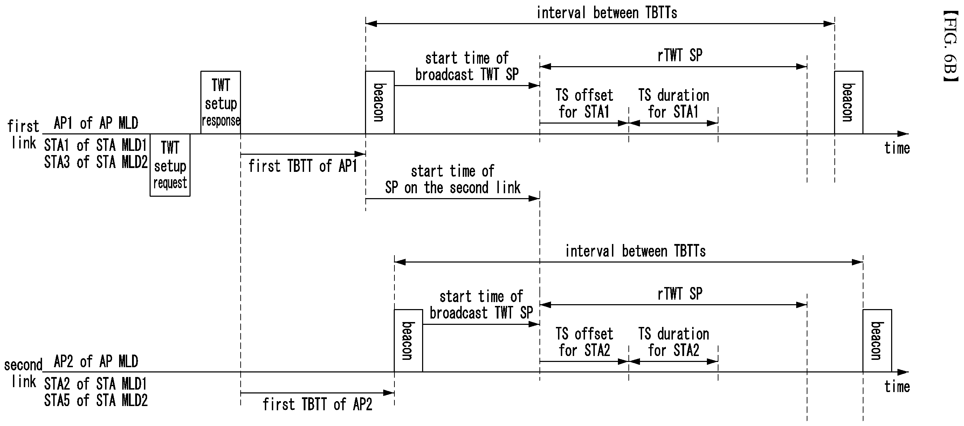

FIG. 6A is a timing diagram illustrating a first exemplary embodiment of a multi-link operation according to a slot-based rTWT, and FIG. 6B is a timing diagram illustrating a second exemplary embodiment of a multi-link operation according to a slot-based rTWT.

As shown in FIGS. 6A and 6B, a slot-based rTWT may be configured on a multi-link, and a multi-link operation according to the slot-based rTWT may be performed. The rTWT may be configured on the multi-link by performing a one-time TWT setup procedure on the first link. In the TWT setup procedure, a TWT setup request frame and a TWT setup response frame may be transmitted and received. Each of the TWT setup request frame and/or TWT setup response frame may include as many TWT elements as the number of links constituting the multi-link. Each TWT element may include information on a TBTT indicating a transmission time of a beacon frame including information on an rTWT ID and an SP (e.g., rTWT SP information) on each link.

Depending on whether a non-simultaneous transmit and receive (NSTR) MLD is assigned to the SP (e.g., rTWT SP) of each link, whether rTWT SPs are synchronized on the multi-link may be determined. For example, the rTWT SPs on the multi-link may be synchronized. Alternatively, the rTWT SPs on the multi-link may be configured independently without synchronization. In the exemplary embodiment of FIG. 6A, the STA MLD with which the STAs are affiliated may be an STA MLD that supports STR operations (i.e. STR STA MLD). Therefore, the rTWT SP on the first link and the rTWT SP on the second link may be configured independently. That is, each of start and end times of the rTWT SP on the first link may be different from each of start and end times of the rTWT SP on the second link.

In the exemplary embodiment of FIG. 6B, the STA MLD with which the STAs are affiliated may be an STA MLD that does not support STR operations (i.e. NSTR STA MLD). Therefore, the rTWT SP on the first link and the rTWT SP on the second link may be synchronized. That is, each of the start and end times of the rTWT SP on the first link may be set to be the same as each of the start and end times of the rTWT SP on the second link. For synchronization of rTWT SPs on the multi-link, the AP may transmit a beacon frame including information of a broadcast TWT SP start time on each link.

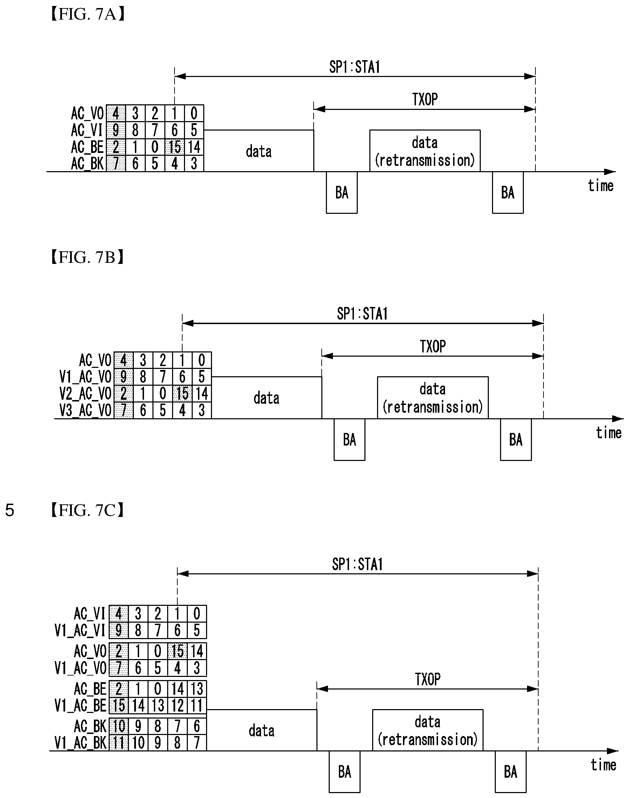

FIG. 7A is a timing diagram illustrating a first exemplary embodiment of a channel access procedure when one STA is allocated to one SP in a slot-based rTWT operation, FIG. 7B is a timing diagram illustrating a second exemplary embodiment of a channel access procedure when one STA is allocated to one SP in a slot-based rTWT operation, and FIG. 7C is a timing diagram illustrating a third exemplary embodiment of a channel access procedure when one STA is allocated to one SP in a slot-based rTWT operation.

In the exemplary embodiment of FIG. 7A, a channel contention procedure (e.g., channel access procedures) may be performed using all ACs. In the exemplary embodiment of FIG. 7B, a channel contention procedure (e.g., channel access procedures) may be performed using virtual links. In the exemplary embodiment of FIG. 7C, a channel contention procedure (e.g., channel access procedures) may be performed by merging all ACs and virtual links. In exemplary embodiments, a backoff counter value indicated with hatching may be a newly selected backoff counter value, and a backoff counter value not indicated with hatching may be a backoff counter value decreased by 1 when a channel is idle.

TSN data may be entered into a TSN queue or A_VO queue, and when the rTWT SP starts, the data (e.g., TSN data) may be transmitted depending on a result of the channel contention procedure. Referring to FIG. 7A, the AP may perform an EDCAF (EDCA Function) for each AC, and after a start time of the rTWT SP, may transmit a frame (e.g., data frame) according to an AC EDCAF with a backoff counter value of 0. One STA (e.g., STA1) may operate in the SP1 (e.g., rTWT SP1), and the entire period of the SP1 may be allocated as a TS in which the STA1 operates. A TXOP duration of the frame may be set to the TS allocated to the STA1.

Within the TXOP duration, transmission of the frame (e.g., data frame), transmission of a reception response frame for the frame, and retransmission of the frame may be completed. If a (re)transmission procedure of the frame is not completed within the TXOP duration, it may be unnecessary to retransmit the TSN data after the TS of the rTWT SP because a transmission time is important for the TSN data. Therefore, the TSN data may be deleted from the queue. If the transmission procedure of the frame succeeds at one time, a time equal to or greater than a point coordination function (PCF) interframe space (PIFS) may remain from a time of transmitting the reception response frame (e.g., block ACK (BA) frame) for the corresponding frame to an end time of the SP. In this case, the AP may transmit a general data frame after performing a channel contention procedure after a PIFS. Alternatively, the AP may transmit a general data frame using the remaining TXOP without going through a channel contention procedure after a SIFS or PIFS. The general data frame may include data other than TSN data. Alternatively, the AP may allocate uplink resources in the remaining TXOP period by transmitting a trigger frame after a SIFS or PIFS. The AP's uplink resource allocation may be for uplink transmission of low-latency data (e.g., TSN data).

Referring to FIG. 7B, the AP may map TSN data to AC_VO and use a VO EDCAF (e.g., AC_VO EDCAF). Additionally, the AP may operate additional three virtual VO EDCAFs by additionally configuring virtual links. That is, the four VO EDCAFs may be performed independently, and the AP may transmit a TSN frame when a backoff counter value becomes 0 after the start time of the rTWT SP. The four VO EDCAFs may include 1 VO EDCAF on an actual link and 3 VO EDCAFs on virtual links.

Referring to FIG. 7C, the AP may use virtual links with all ACs. One virtual link may be added for each AC. All EDCAFs may be performed independently, and the AP may transmit a TSN frame when a backoff counter value becomes 0 after the start time of the rTWT SP.

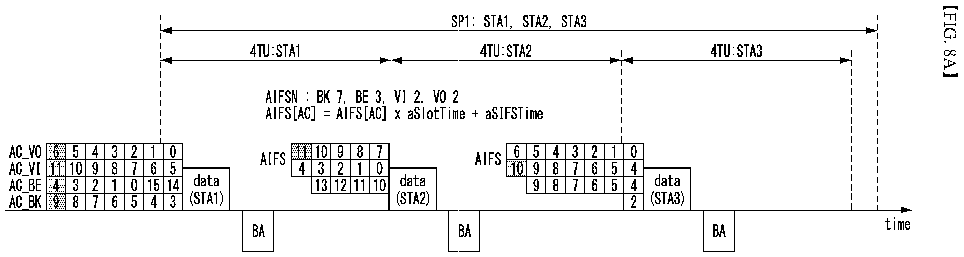

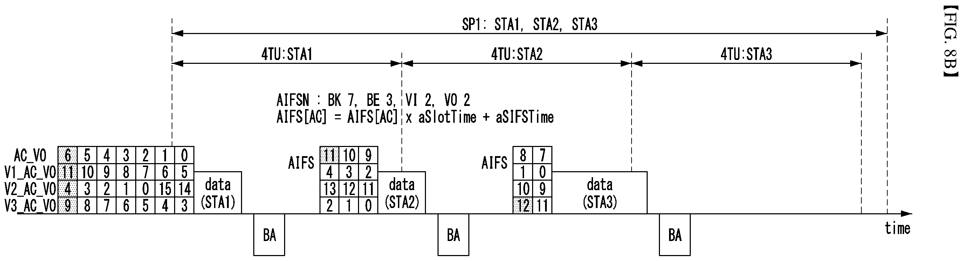

FIG. 8A is a timing diagram illustrating a first exemplary embodiment of a channel access procedure when multiple STAs are assigned to one SP in a slot-based rTWT operation, and FIG. 8B is a timing diagram illustrating a secondary exemplary embodiment of a channel access procedure when multiple STAs are assigned to one SP in a slot-based rTWT operation.

As shown in FIG. 8A, the AP may use all ACs to transmit TSN data. The AP may perform backoff procedures according to all AC EDCAFs. For example, the backoff procedures may include an AC_VO backoff procedure, AC_VI backoff procedure, AC_BE backoff procedure, and AC_BK backoff procedure. The AC_VO backoff procedure may be a backoff procedure for transmission of a data frame corresponding to AC_VO. The AC_VI backoff procedure may be a backoff procedure for transmission of a data frame corresponding to AC_VI. The AC_BE backoff procedure may be a backoff procedure for transmission of a data frame corresponding to AC_BE. The AC_BK backoff procedure may be a backoff procedure for transmission of a data frame corresponding to AC_BK.

When a backoff counter value for a specific AC EDCAF becomes 0, the AP may transmit a packet existing in a queue of that AC. In exemplary embodiments, the backoff counter value being 0 may mean that the backoff procedure succeeds. In exemplary embodiment, a backoff counter value indicated with hatching may be a newly selected backoff counter value, and a backoff counter value not indicated with hatching may be a backoff counter value decreased by 1 when a channel is in an idle state. The AP may transmit a data frame (e.g., TSN data) to the STA1 in the first TS. Thereafter, the AP may perform backoff procedures again after waiting during an arbitration interframe space (AIFS) for transmission of a data frame in the second TS. The backoff procedures according to all AC EDCAFs may be performed after an AIFS from a time of receiving a reception response frame for the data frame transmitted in the first TS.

The AIFS may be set differently for each AC. The AIFS[AC] may be set as (AIFSN[AC] × aSlotTime + aSIFSTime). For example, the AIFSN[VO] may be 2, the AIFSN[VI] may be 2, the AIFSN[BE] may be 3, and the AIFSN[BK] may be 7. In this case, the AIFS of AC_VO may be the same as the AIFS of AC_VI. The AIFS of AC_BE may be longer than the AIFS of each of AC_VO and AC_VI by 1 aSlotTime. The AIFS of AC_BK may be longer than the AIFS of AC_BE by 4 aSlotTimes.

Since the data frame (e.g., TSN data) of AC_VO is transmitted in the first TS, the AP may select a new value as a backoff counter value of AC_VO. That is, the backoff counter value of AC_VO in the second TS may be set to a new value. The AP may use the remaining values in the transmission procedure of the previous data frame as backoff counter values for AC_VI, AC_BE, and AC_BK, respectively. When the backoff counter value of AC_VI becomes 0, the AP may transmit a data frame (e.g., TSN data) associated with the AC_VI backoff procedure to the STA2 in the second TS. In the TWT setup procedure, it may be negotiated that the STA2 can receive a data frame before a start time of the TS. In this case, even when a time when the backoff counter value becomes 0 is before the start time of the TS of the STA2, if a transmission period of the data frame includes the corresponding TS, the AP may transmit the data frame to the STA2.

In the TWT setup procedure, it may be negotiated that the STA can receive a data frame after a start time of the TS. In this case, if a time when the backoff counter value becomes 0 is before the start time of the TS, the AP may resume the backoff procedure (e.g., AC_VO backoff procedure) without changing the backoff parameters (e.g., CW[AC], QSRC[AC]). That is, the backoff procedure may be performed again so that the data frame is transmitted at or after the start time of the TS. After transmitting the data frame to the STA2, the AP may perform backoff procedures after an AIFS to transmit a data frame to the STA3 in the same or similar manner as described above. When a backoff counter value becomes 0, the AP may transmit a data frame (e.g., TSN data) to the STA3.

As shown in FIG. 8B, AC_VO may be used for transmission of a data frame (e.g., TSN data), and an additionally configured virtual links may be used. The AP may perform backoff procedures according to four VO EDCAFs. The four backoff procedures may include a backoff procedure on an actual link and backoff procedures on three virtual links. When a backoff counter value according to one backoff procedure becomes 0, the AP may transmit a data frame associated with the backoff procedure. Since the same VO EDCAFs are used, an AIFS, a waiting time after transmission of the first data frame, may be the same for all VO EDCAFs. The AP may perform backoff procedures after an AIFS from a time of receiving a reception response frame for the first data frame. The AP may select a new backoff counter value for a VO EDCAF whose backoff counter value has become 0 in the transmission procedure of the previous data frame. The transmission procedure of data frames (e.g., TSN data) in the remaining TSs within the same rTWT SP may be performed in the same or similar manner to the method described above.

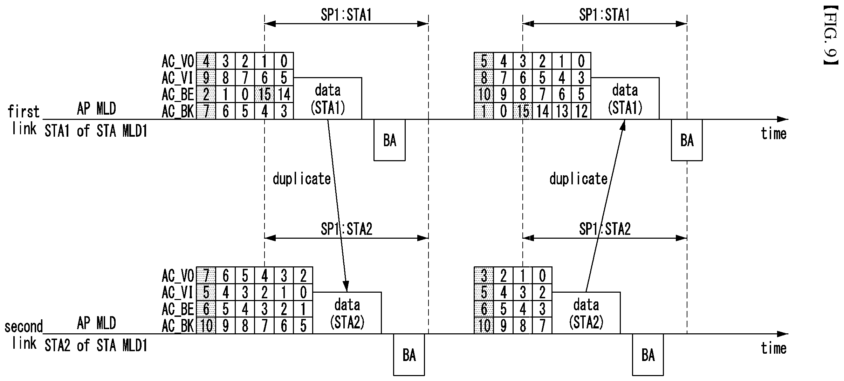

FIG. 9 is a timing diagram illustrating a first exemplary embodiment of a channel access procedure and data transmission method when one STA is allocated to one SP in a multi-link operation according to a slot-based rTWT.

As shown in FIG. 9, a rTWT SP may be configured on a multi-link, and a multi-link operation according to the rTWT may be performed. The rTWT may be configured on the multi-link by performing a TWT setup procedure on one link. A TWT ID on the first link may be the same as a TWT ID on the second link. Alternatively, the TWT ID may be different for each link. If the TWT ID is the same on the multi-link, SPs may be synchronized on the multi-link. For example, each of start and end times of the SP on the first link may be the same as each of start and end time of the SP on the second link.

When a procedure of configuring the rTWT on the multi-link is performed, the SPs may be allocated so that STAs affiliated with the STA MLD operate in the same period. When the same data frame (e.g., TSN data) is transmitted in the SPs on the multi-link, a transmission success rate of the data frame may be improved. In the exemplary embodiment of FIG. 9, a channel access procedure on the first link may succeed first, and the AP may transmit a data frame to the STA1 on the first link. Thereafter, a channel access procedure may succeed on the second link, and the AP may transmit the same data frame as the data frame transmitted on the first link to the STA2 on the second link.

A receiver address (RA) of the data frame transmitted on the first link may be different from an RA of the data frame transmitted on the second link. For example, the RA of the data frame transmitted on the first link may indicate the STA1, and the RA of the data frame transmitted on the second link may indicate the STA2. A transmission start time of the data frame on the first link may be different from a transmission start time of the data frame on the second link. A value indicating an end time of an SP1, which is included in the data frame of the first link, may be set differently from a value indicating an end time of the SP1, which is included in the data frame of the second link. Then, in the SP1, the channel access procedure on the second link may succeed first, and the AP may transmit a data frame to the STA2 on the second link. Thereafter, a channel access procedure on the first link may succeed, and the AP may transmit the same data frame as the data frame transmitted on the second link to the STA1 on the first link.

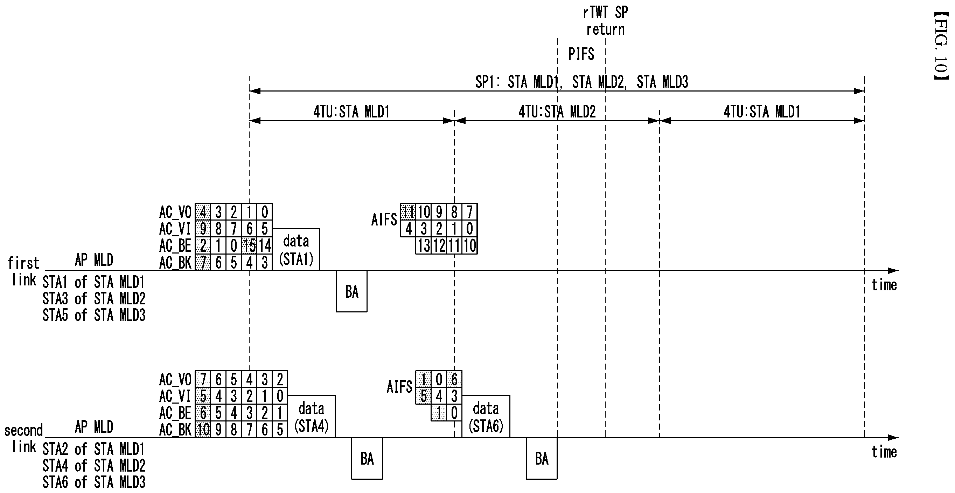

FIG. 10 is a timing diagram illustrating a first exemplary embodiment of a channel access procedure and data transmission method when multiple STAs are allocated to one SP in a multi-link operation according to a slot-based rTWT.

As shown in FIG. 10, multiple STAs may be allocated within one SP, and operations according to the rTWT SP may be performed on a multi-link. The STA1 and STA2 of STA MLD1, the STA3 and STA4 of STA MLD2, and the STA5 and STA6 of STA MLD3 may be allocated within an SP1 of the first link and the second link. A periodicity of the SP on the first link may be synchronized with a periodicity of the SP on the second link. Identically or similarly to the exemplary embodiment of FIG. 9 described above, the AP MLD may transmit data frames (e.g., TSN data) including the same payload on the multi-link. Each of an RA and duration of the data frame on the first link may be different from each of an RA and duration of the data frame on the second link. The STA MLD may receive the data frames within the same TS on the multi-link, select one data frame received without errors among the data frames, and discard other data frame(s) not selected. The above-described operation may be performed repeatedly as many times as the number of STAs allocated within the rTWT SP.

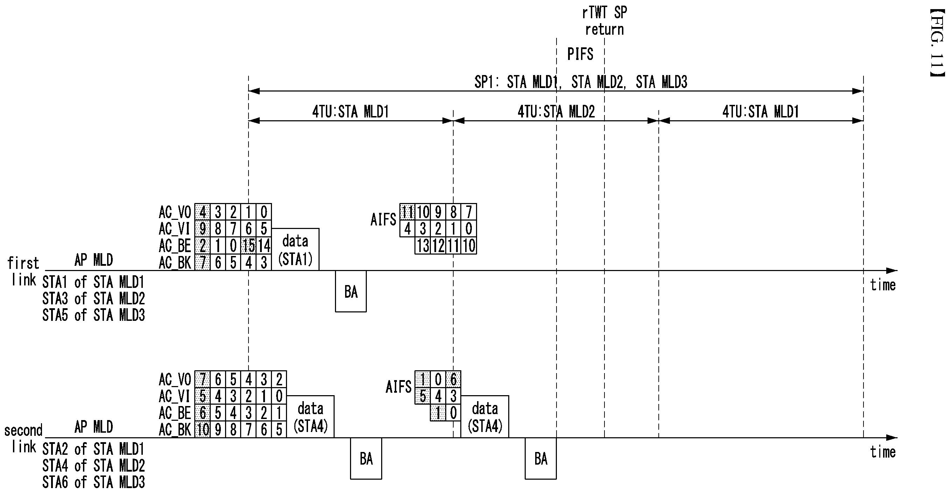

FIG. 11 is a timing diagram illustrating a second exemplary embodiment of a channel access procedure and data transmission method when multiple STAs are allocated to one SP in a multi-link operation according to a slot-based rTWT.

As shown in FIG. 11, multiple STAs may be allocated within one SP, and operations according to an rTWT SP may be performed on a multi-link. The STA1 and STA2 of STA MLD1, the STA3 and STA4 of STA MLD2, and the STA5 and STA6 of STA MLD3 may be allocated within an SP1 of the first link and the second link. A periodicity of the SP on the first link may be synchronized with a periodicity of the SP on the second link. In a TWT setup procedure, it may be negotiated that each of STAs can receive a data frame (e.g., TSN data) before a start time of a TS. In this case, the AP (e.g., AP MLD) may immediately transmit a data frame if the channel access procedure succeeds.

If a channel access procedure succeeds first on the first link after the SP1 starts, the AP may transmit a data frame to the STA1 on the first link. A channel access procedure succeeds on the second link within the first TS allocated to the STA MLD1, but since the data frame is being transmitted to the STA1 of STA MLD1 on the first link, the AP may transmit a data frame to the STA4 of STA MLD2. After completion of transmission of the data frame of the STA1 on the first link, the AP may perform a channel access procedure on the first link. After completion of transmission of the data frame of the STA4 on the second link, the AP may perform a channel access procedure on the second link.

If the channel access procedure succeeds first on the second link, the AP may transmit a data frame to the STA4 of STA MLD2 on the second link. Even when the TS remains, if transmission of all data frames is completed, the SP may be terminated early. If there is no additional data transmission during a PIFS after a time of receiving a reception response frame (e.g., BA frame) for the data frame, the SP may be terminated early. Thereafter, a normal data frame transmission procedure may be performed. A normal data frame may include data other than TSN data. The AP may terminate the SP by transmitting a QoS Null frame including information indicating a duration 0 after an SIFS from a time of receiving the reception response frame for the last data frame (e.g., the last TSN data). Alternatively, the AP may terminate the SP by transmitting a CF-END frame after a SIFS from the time of receiving the reception response frame for the last data frame (e.g., last TSN data). Alternatively, if the TS remains and transmission of all data of the AP is completed, the AP may allocate an uplink resource by transmitting a trigger frame instead of terminating the rTWT SP. The uplink resource may be a resource for transmission of TSN data. Alternatively, the AP may indicate (or configure) STAs to transmit TSN data through channel contention without terminating the rTWT SP.

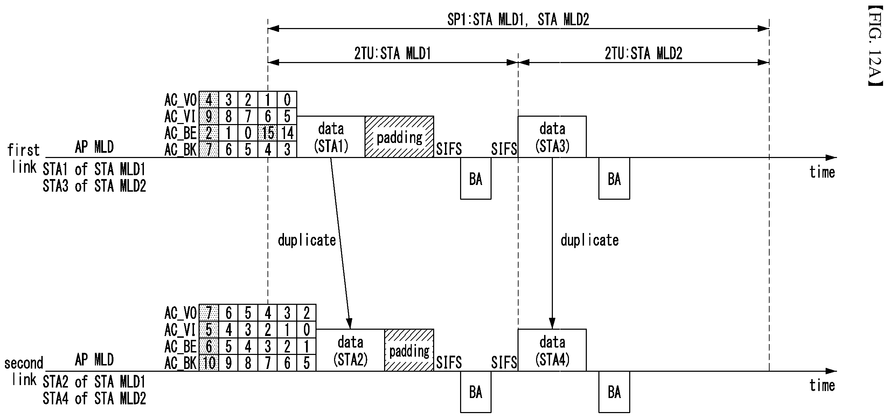

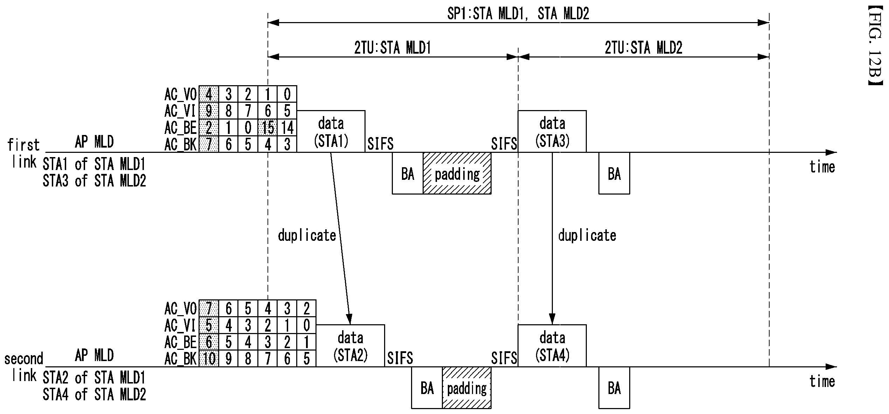

FIG. 12A is a timing diagram illustrating a first exemplary embodiment of a channel access procedure and data transmission method according to slots when multiple STAs are allocated to one SP in a multi-link operation according to a slot-based rTWT, and FIG. 12B is a timing diagram illustrating a second exemplary embodiment of a channel access procedure and data transmission method according to slots when multiple STAs are allocated to one SP in a multi-link operation according to a slot-based rTWT.

As shown in FIGS. 12A and 12B, multiple STAs may be allocated to one SP. If the length of the SP is short, one TXOP may be configured. An SP on the first link may be synchronized with an SP on the second link. In a TWT setup procedure, it may be negotiated that each of STAs can receive a data frame (e.g., TSN data) at a start time of a TS. In this case, each of the STAs may receive data frames at or after the start time of the TS. In the exemplary embodiment of FIG. 12A, identically or similarly to the exemplary embodiment of FIG. 9, the AP (e.g., AP MLD) may transmit a data frame (e.g., TSN data) on the first link on which a channel access procedure succeeds first. Thereafter, if a channel access procedure succeeds on the second link, the AP may transmit the same data frame as the data frame transmitted on the first link on the second link.

At a start time of the second TS of the first link, a data frame of the STA3 may be transmitted. At a start time of the second TS of the second link, a data frame of the STA4 may be transmitted. To enable transmission of the data frame at the start time of the second TS, the AP may add padding to the data frame transmitted in the first TS. In the exemplary embodiment of FIG. 12B, to enable transmission of the data frame at the start time of the second TS, the STA may add padding to a reception response frame for the data frame received on the first TS.

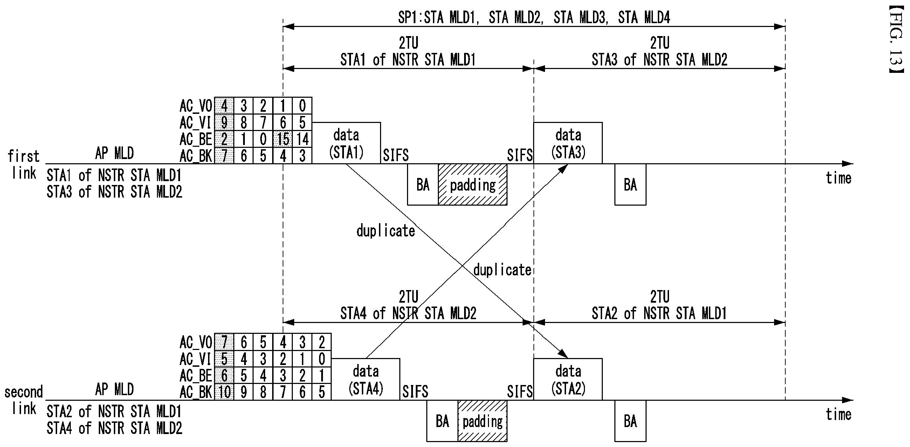

FIG. 13 is a timing diagram illustrating a first exemplary embodiment of a channel access procedure and data transmission method when multiple NSTR STAs are allocated to one SP in a multi-link operation according to a slot-based rTWT.

As shown in FIG. 13, STAs of an NSTR STA MLD may be allocated to an rTWT SP within an NSTR link pair (e.g., a pair of the first link and the second link). In this case, STAs of the same NSTR STA MLD may not be allocated to the same TS within the NSTR link pair. For example, if the STA MLD1 and the STA MLD2 are both NSTR STA MLDs, and/or if the STA1 of STA MLD1 is allocated to the first TS of the SP1 on the first link, the STA2 of STA MLD1 may not be allocated to the first TS of the SP1, which is the same period, on the second link which belongs to the NSTR link pair with the first link. In this case, the STA4 of STA MLD2 may be allocated to the first TS of the second link. For reliability of data transmission, when transmitting data frames repeatedly, it may be preferable to transmit the data frames on different links.

The STA3 of STA MLD2 may be allocated to the second TS of the SP1 on the first link, and the STA2 of STA MLD1 may be allocated to the second TS of the SP1 on the second link. If the channel access procedure succeeds on the first link, the AP (e.g., AP MLD) may transmit a data frame (e.g., TSN data) to the STA1 on the first link. If the channel access procedure succeeds on the second link, the AP (e.g., AP MLD) may transmit a data frame (e.g., TSN data) to the STA4 on the second link.

When a reception response frame for the data frame is received within the TS and the corresponding TS can be terminated early, the NSTR link pair characteristics may be considered. For example, even if the transmission procedure of the data frame for the STA4 on the second link is completed early, if a duplicate transmission procedure of the same data frame for the STA2 on the second link is immediately initiated, the transmission operation on the second link may generate interference to the STA1 operating on the first link due to the characteristics of the NSTR link pair. Accordingly, a transmission error may occur on the first link. Therefore, STAs of the NSTR STA MLD may not be allocated to the same time period in the NSTR link pair. The STA may perform a frame transmission and reception operation within the TS.

To enable transmission of a data frame in the second TS, the AP may add padding to the data frame of the STA1 and/or the data frame of the STA4 in the first TS, and the STA1 may add padding to a reception response frame for the data frame received in the first TS, and the STA4 may add padding to a reception response frame for the data frame received in the first TS. In the second TS of the first link, the AP may transmit to the STA3 the same data frame as the data frame transmitted in the first TS of the second link. In the second TS of the second link, the AP may transmit to the STA2 the same data frame as the data frame transmitted in the first TS of the first link. That is, the data frames may be transmitted repeatedly on different links.

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of an access point (AP), comprising:
performing backoff procedures for all access categories (ACs) for transmission to a first station (STA);
in response to that a first backoff procedure among the backoff procedures succeeds, transmitting a first data frame associated with the first backoff procedure to the first STA; and
receiving a reception response frame for the first data frame from the first STA.

2. The method according to claim 1, wherein the first data frame is transmitted within a restricted target wake time (rTWT) service period (SP), and when a time from a time of receiving the reception response frame to an end time of the rTWP SP is equal to or larger than a predefined time, a transmission procedure of a second data frame is performed within the rTWT SP after receipt of the reception response frame.

3. The method according to claim 2, wherein the first data frame is an rTWT data frame, and the second data frame is a general data frame not including time sensitive network (TSN) data.

4. The method according to claim 3, wherein the rTWT data frame is a delay-sensitive data frame, and is identified by an indicator included in the rTWT data frame.

5. The method according to claim 1, wherein the first data frame is transmitted within the rTWT SP, and when a time from a time of receiving the reception response frame to an end time of the rTWP SP is equal to or larger than a predefined time, a transmission procedure of a trigger frame for uplink resource allocation is performed within the rTWT SP.

6. The method according to claim 1, further comprising:
performing the backoff procedures for all the ACs for transmission to a second STA after an arbitration interframe space (AIFS) elapses from a time of receiving the reception response frame; and
in response to that a second backoff procedure among the backoff procedures succeeds, transmitting a third data frame associated with the second backoff procedure to the second STA.

7. The method according to claim 6, wherein the backoff procedures for all the ACs include an AC_VO backoff procedure, AC_VI backoff procedure, AC_BE backoff procedure, and AC_BK backoff procedure, and each of the first backoff procedure and the second backoff procedure is one of the AC_VO backoff procedure, the AC_VI backoff procedure, the AC_BE backoff procedure, and the AC_BK backoff procedure.

8. The method according to claim 6, wherein the first data frame is transmitted in a period including a first time slot (TS) allocated to the first STA within an rTWT SP, and the third data frame is transmitted in a period including a second TS allocated to the second STA within the rTWT SP.

9. The method according to claim 8, wherein if the second backoff procedure is completed before a start time of the second TS, the second backoff procedure is performed again so that the third data frame is transmitted at or after the start time of the second TS.

10. The method according to claim 6, wherein in a procedure for the transmission to the second STA, a backoff counter value of the first backoff procedure is set to a new value, and a backoff counter value of each of remaining backoff procedures excluding the first backoff procedure among the backoff procedures is set to a remaining value in a procedure for the transmission to the first STA.

11. A method of an access point (AP), comprising:
performing a first backoff procedure for a first access category (AC) on an actual link and a second backoff procedure for the first AC on a virtual link, for transmission to a first station (STA);
in response to that the first backoff procedure succeeds, transmitting a first data frame associated with the first backoff procedure to the first STA; and
receiving a reception response frame for the first data frame from the first STA.

12. The method according to claim 11, further comprising: performing a third backoff procedure for a second AC on the actual link and a fourth backoff procedure for the second AC on the virtual link, for transmission to the first STA,
wherein the first backoff procedure, the second backoff procedure, the third backoff procedure, and the fourth backoff procedure are performed in a same time period.

13. The method according to claim 11, further comprising:
performing the first backoff procedure and the second backoff procedure for transmission to a second STA, after an arbitration interframe space (AIFS) from a time of receiving the reception response frame; and
in response to that the second backoff procedure succeeds, transmitting a second data frame associated with the second backoff procedure to the second STA.

14. The method according to claim 13, wherein the first data frame is transmitted in a period including a first time slot (TS) allocated to the first STA within an rTWT SP, and the second data frame is transmitted in a period including a second TS allocated to the second STA within the rTWT SP.

15. The method according to claim 14, wherein if the second backoff procedure is completed before a start time of the second TS, the second backoff procedure is performed again so that the second data frame is transmitted at or after the start time of the second TS.

16. The method according to claim 13, wherein in a procedure for the transmission to the second STA, a backoff counter value of the first backoff procedure is set to a new value, and a backoff counter value of the second backoff procedure is set to a remaining value in a procedure for the transmission to the first STA.

17. An access point (AP) comprising:
a processor; and
a memory storing one or more instructions executable by the processor,
wherein the one or more instructions are executed to perform:
performing backoff procedures for all access categories (ACs) for transmission to a first station (STA);
in response to that a first backoff procedure among the backoff procedures succeeds, transmitting a first data frame associated with the first backoff procedure to the first STA; and
receiving a reception response frame for the first data frame from the first STA.

18. The AP according to claim 17, wherein the first data frame is transmitted within a restricted target wake time (rTWT) service period (SP), and when a time from a time of receiving the reception response frame to an end time of the rTWP SP is equal to or larger than a predefined time, a transmission procedure of a second data frame is performed within the rTWT SP after receipt of the reception response frame.

19. The AP according to claim 18, wherein the first data frame is an rTWT data frame, and the second data frame is a general data frame not including time sensitive network (TSN) data.

20. The AP according to claim 17, wherein the first data frame is transmitted within the rTWT SP, and when a time from a time of receiving the reception response frame to an end time of the rTWP SP is equal to or larger than a predefined time, a transmission procedure of a trigger frame for uplink resource allocation is performed within the rTWT SP.
